Europäisches Patentamt

European Patent Office

Office européen des brevets

(19)

(11) Veröffentlichungsnummer: **0 178 412**
**B1**

# (12) EUROPÄISCHE PATENTSCHRIFT

(45) Veröffentlichungstag der Patentschrifft:
21.03.90

(21) Anmeldenummer: **85110056.0**

(22) Anmeldetag: **09.08.85**

(51) Int. Cl. ⁵: **F 16 F   9/19,** F 41 A   25/02

(54) Dämpfungseinrichtung für eine Maschinenwaffe.

(30) Priorität: 13.10.84 DE 3437653

(43) Veröffentlichungstag der Anmeldung:
23.04.86 Patentblatt 86/17

(45) Bekanntmachung des Hinweises auf die Patenterteilung:
21.03.90 Patentblatt 90/12

㊱ Bennante Vertragsstaaten:
CH DE FR GB IT LI

(56) Entgegenhaltungen:
DE-A-1 949 589
DE-A-2 932 553
DE-A-2 937 701
DE-C-55 189
GB-A-2 027 160
US-A-4 126 302

Entscheidung der Beschwerdekammer vom
25.03.1985 "T 169/83"

(73) Patentinhaber: Rheinmetall GmbH
Ulmenstrasse 125 Postfach 6609
D-4000 Düsseldorf (DE)

(72) Erfinder: Frye, Günther
Matthias-Claudius-Strasse 1d
D-4006 Erkrath (DE)
Erfinder: Schenk, Norbert
Wörthstrasse 13
D-4000 Düsseldorf (DE)

EP 0 178 412 B1

LIBERGRAF, STOCKHOLM 1990

## Beschreibung

### Dämpfungseinrichtung für eine Maschinenwaffe

Die Erfindung betrifft eine Dämpfungseinrichtung für eine Maschinenwaffe nach dem Oberbegriff des Patentanspruchs 1.

Prinzipielle Formen von hydraulischen Dämpfungseinrichtungen sind aus dem waffentechnischen Taschenbuch der Fa. Rheinmetall, fünfte Auflage 1980, Seite 449, bekannt. Insbesondere zur Verwendung bei Maschinenwaffen ist eine Dämpfungseinrichtung bekannt, bei der ein den Strömungsquerschnitt ändernder Ventilteller durch eine Druckfeder im Bremspunkt gesteuert wird. Dabei muß die Druckfeder die Masse des Ventiltellers über einen relativ großen Weg fortbewegen. Infolge Reibung, Stoßbeanspruchungen sowie thermischer Belastung können Störungen dieses Feder- Masse-Systems auftreten, was zu ungleichmäßigen Dämpfungseigenschaften führt.

Der Erfindung liegt die Aufgabe zugrunde, eine verbesserte Dämpfungseinrichtung anzugeben, die bei allen vorkommenden Betriebsbeanspruchungen ein gleichmäßigeres Dämpfungsverhalten zeigt.

Ausgehend von einer Dämpfungseinrichtung der eingangs genannten Art wird diese Aufgabe durch die im Patentanspruch 1 angegebene Erfindung gelöst.

Vorteilhafte Ausgestaltungen der Erfindung gehen aus den Unteransprüchen hervor.

Die Erfindung wird nachfolgend, unter Bezug auf die Zeichnung, näher erläutert. Dabei zeigt

Fig. 1: einen Längsschnitt durch eine Dämpfungseinrichtung in einem ersten Betriebszustand;

Fig. 2: einen Längsschnitt durch die Dämpfungseinrichtung in einem zweiten Betriebszustand;

Fig. 3: einen Querschnitt durch die Dämpfungseinrichtung nach Fig. 1 entlang der Linie 3 – 3.

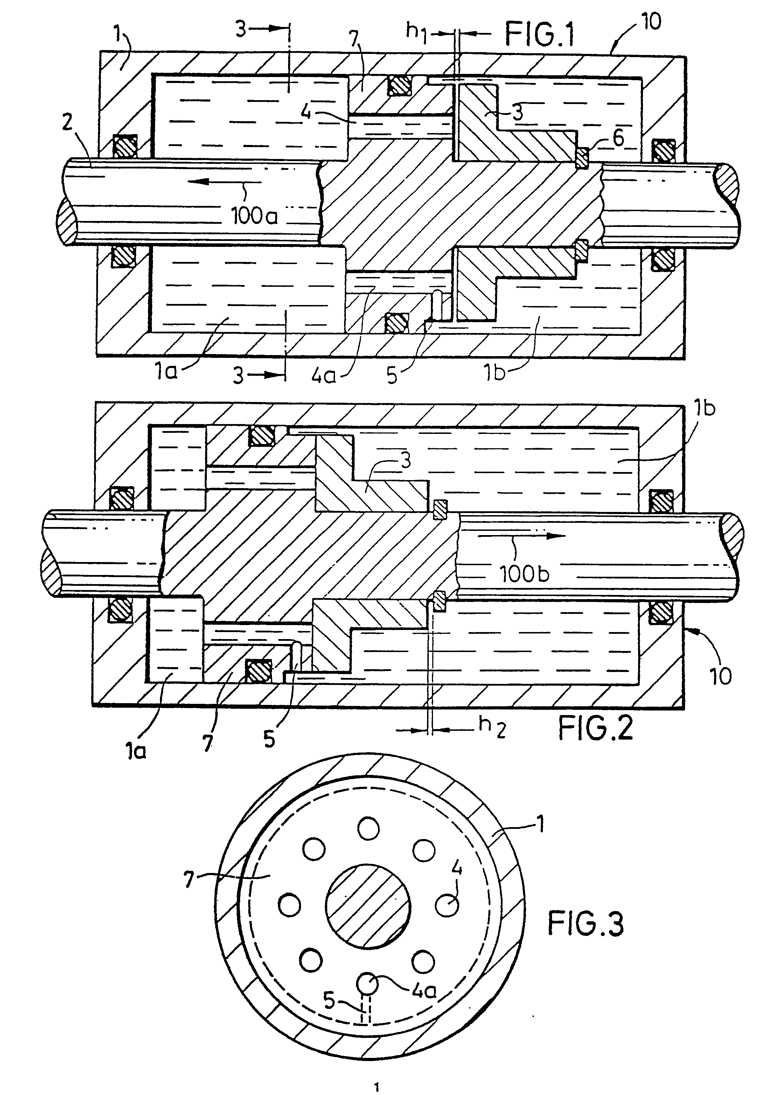

Die Dämpfungseinrichtung 10 umfaßt ein flüssigkeitsgefülltes Kolbengehäuse 1, in dem ein mit einer Kolbenstange 2 verbundener Kolben gleitbar gelagert ist. Der Kolben 7, der auf dem Umfang flüssigkeitsundurchlässig abgedichtet ist, unterteilt das Kolbengehäuse 1 in zwei volumenvariable Teilräume 1a, 1b. Im Kolben 7 sind Überströmöffnungen 4 angeordnet, die als achsparallele Bohrungen ausgebildet sind, die mit gleichem Radialabstand gleichmäßig auf einem Kreisumfang verteilt angeordnet sind (Fig. 1, Fig. 3). Durch diese Überströmöffnungen 4 wird, sofern ihre Öffnungen freiliegen, eine flüssigkeitsdurchlässige Verbindung zwischen den beiden Teilräumen 1a, 1b des Kolbengehäuses 1 hergestellt. Auf der Kolbenstange 2 ist, diese koaxial umgreifend, ein Ventilteller 3 gleitbar gelagert, der sich in Radialrichtung mindestens soweit erstreckt, daß er bei Anlage am Kolben 7 die Querschnitte der Überströmöffnungen abdeckt. Die freie Weglänge des Ventiltellers 3 auf der Kolbenstange 2 wird einerseits durch den Kolben 7 selbst, andererseits mit einem zusätzlich auf der Kolbenstange 2 angeordneten Anschlag 6 begrenzt. Der Anschlag 6 kann beispielsweise ein Klemmring sein, der in eine ringförmig umlaufende Nut der Kolbenstange 2 eingesetzt ist. In mindestens eine Überströmöffnung 4a mündet eine Rückströmbohrung 5 geringeren Durchmessers derart, daß selbst bei einseitigem Verschluß aller Überströmöffnungen 4, 4a, durch den am Kolben 7 anliegenden Ventilteller 3, eine flüssigkeitsdurchlässige Verbindung zwischen den beiden Teilräumen 1a, 1b bestehen bleibt. Die Dämpfungseinrichtung 10 funktioniert wie folgt: wenn die Kolbenstange 2 in Richtung des Pfeils 100a fortbewegt wird, wird der Ventilteller 3 durch die Überströmbohrungen 4 gegen seinen Anschlag 6 gedrückt. Dadurch kann Flüssigkeit (Hydrauliköl) aus dem Teilraum 1a durch die Überströmbohrungen 4 an dem mit Abstand $h_1$ vom Kolben 7 arretierten Ventilteller 3 vorbeifließen und in den Teilraum 1b gelangen. Der Abstand $h_1$ wird zweckmäßig dem Überströmungsquerschnitt derart angepaßt, daß der Hub des Ventiltellers 3 zwischen seinen verschiedenen Extremstellungen auf ein Minimum begrenzt ist. Eine Veränderung des Abstands $h_1$ ist zwecks definierter Veränderung des Bremspunktes denkbar. Durch Anpassung an den Überströmquerschnitt wird der frühestmögliche Bremspunkt erreicht. Da bei offenen Überströmöffnungen 4 (Fig. 1) der Druck in Teilraum 1a dem Druck in Teilraum 1b entspricht, läßt sich die Kolbenstange 2 ohne nennenswerte Bremswirkung in Richtung des Pfeils 100a bewegen.

Wenn im Umkehrpunkt (Bremspunkt) die Kolbenstange 2 die Schubrichtung umkehrt und sich in Richtung des Pfeils 100b fortbewegt (Fig. 2), legt sich der Ventilteller 3 infolge des jetzt auf ihn einwirkenden Flüssigkeitsdrucks an den Kolben 7 an und verschließt so die Überströmbohrungen 4, so daß ein Flüssigkeitsausgleich zwischen den Teilräumen 1a und 1b nur noch auf dem Weg über die Rückströmbohrungen 5 relativ kleinen Durchmessers und die Überströmöffnung 4a erfolgen kann. Dies führt zur gewünschten, die Fortbewegung der Kolbenstange in Richtung des Pfeils 100b verlangsamenden, Bremswirkung.

Da die Dämpfungseinrichtung ohne jegliche Feder zur Betätigung des Ventiltellers 3 auskommt und sich dadurch durch einen sehr einfachen Aufbau auszeichnet, lassen sich unterschiedliche Dämpfungseinwirkungen als Folge extrem unterschiedlicher Betriebsbedingungen mit großer Sicherheit ausschließen.

## Patentansprüche

1. Dämpfungseinrichtung für eine Maschinenwaffe mit einem in einem flüssigkeitsgefüllten Kolbengehäuse gleitbar gelagerten, mit einer Kolbenstange verbundenen Kolben, der das Kolbengehäuse in zwei volumenveränderbare Teilräume unterteilt und beide Teilräume verbindende, als achsparallele Bohrungen ausgebildete, Überströmöffnungen trägt, die durch einen auf der Kolbenstange und diese koaxial umgreifend gleitbar gelagerten Ventilteller verschließbar sind, *dadurch gekennzeichnet, daß* in mindestens eine Überströmöffnung (4a) eine Rückströmbohrung (5) geringeren Durchmessers mündet, so daß bei einseitigem Verschluß aller Überströmöffnungen (4, 4a) durch den Ventilteller (3) eine flüssigkeitsdurchlässige Verbindung zwischen den beiden Teilräumen (1a, 1b) bestehen bleibt.

2. Dämpfungseinrichtung nach Anspruch 1, *dadurch gekennzeichnet, daß* zur Begrenzung der axialen Wegstrecke des Ventiltellers (3) ein auf der Kolbenstange (2) befestigter Anschlag (6) vorgesehen ist.

3. Dämpfungseinrichtung nach einem der Ansprüche 1 oder 2, *dadurch gekennzeichnet, daß* der Querschnitt eines Ringspaltes zwischen Ventilteller (3) und Kolbengehäusebohrung dem Querschnitt der Überströmöffnungen (4, 4a) derart angepaßt ist, daß in der Bewegungsphase mit offenen Überströmöffnungen (4, 4a). Keine nennenswerte Drossel – bzw. Bremswirkung erzielt wird.

## Claims

1. Shock absorber for a machine weapon, having a piston which is slidably mounted in a liquid-filled piston housing and which is connected with a piston rod, the piston subdividing the piston housing into two partchambers and adjustable in volume and having overflow apertures interconnecting the two part-chambers, the apertures taking the form of paraxial borings and capable of being closed by a valve plate slidably mounted on the piston rod and coaxially surrounding it, characterised by the fact that a return-flow boring (5) of smaller diameter leads into at least one flow aperture (4a), so that when all the overflow apertures (4, 4a) are closed at one end by the valve plate (3) a connection giving passage to liquid is left between the two part-chambers (1a, 1b).

2. Shock absorber in accordance with claim 1, characterised by the fact that in order to limit the axial distance covered by the valve plate (3) a stop (6) is provided which is affixed to the piston rod (2).

3. Shock absorber in accordance with one of claims 1 and 2, characterized by the fact that the cross section of an annular gap between the valve plate (3) and the piston housing boring is adapted to the cross section of the overflow apertures (4, 4a) in such a way that in the phase of the movement with open overflow apertures (4, 4a) no appreciable throttle or braking effect is obtained.

## Revendications

1. Dispositif d'amortissement destiné à une arme automatique, comportant un piston relié à une tige de piston, monté coulissant dans un boîtier de piston rempli d'un liquide, lequel piston subdivise le boîtier de piston en deux compartiments de volume variable, et porte des orifices de trop-plein se présentant sous la forme de perçages d'axe parallèle, reliant les deux compartiments, et qui peuvent être fermés par un plateau de soupape monté coulissant sur la tige de piston et entourant celle-ci coaxialement, caractérisé en ce que dans au moins un orifice de trop-plein (4a) débouche un perçage de reflux (5) de plus petit diamètre, de sorte que lorsque tous les orifices de trop-plein (4, 4a) sont fermés d'un côté par le plateau de soupape (3), il reste une liaison laissant passer le liquide entre les deux compartiments (1a, 1b).

2. Dispositif d'amortissement selon la revendication 1, caractérisé en ce que pour limiter le parcours axial du plateau de soupape (3), il est prévu une butée (6) fixée sur la tige de soupape (2).

3. Dispositif d'amortissement selon l'une des revendications 1 ou 2, caractérisé en ce que la section transversale d'une fente annulaire placée entre le plateau de soupape (3) et le perçage du boîtier de piston, est adaptée à la section transversale des orifices de trop-plein (4, 4a), de telle sorte que dans la phase de déplacement avec orifices de trop-plein (4, 4a) ouverts, il ne se produise pas d'effet notable d'étranglement ou de freinage.

FIG.1

FIG.2

FIG.3